(19) Europäisches Patentamt
European Patent Office
Office européen des brevets

(11) **EP 2 756 237 B1**

(12) **EUROPÄISCHE PATENTSCHRIFT**

(45) Veröffentlichungstag und Bekanntmachung des Hinweises auf die Patenterteilung:
**23.12.2020** **Patentblatt 2020/52**

(21) Anmeldenummer: **12761719.9**

(22) Anmeldetag: **13.09.2012**

(51) Int Cl.:
*C03C 4/08* *(2006.01)*    *C03B 19/09* *(2006.01)*
*C03B 29/02* *(2006.01)*    *F24S 20/20* *(2018.01)*
*F24S 80/50* *(2018.01)*    *C03C 3/06* *(2006.01)*
*F24S 80/52* *(2018.01)*

(86) Internationale Anmeldenummer:
**PCT/EP2012/067927**

(87) Internationale Veröffentlichungsnummer:
**WO 2013/037877 (21.03.2013 Gazette 2013/12)**

(54) **SOLARSTRAHLUNGSEMPFÄNGER MIT EINEM EINTRITTSFENSTER AUS QUARZGLAS**

SOLAR RADIATION RECEIVER HAVING AN ENTRY WINDOW MADE OF QUARTZ GLASS

RÉCEPTEUR SOLAIRE POURVU D'UNE FENÊTRE D'ENTRÉE EN VERRE DE QUARTZ

(84) Benannte Vertragsstaaten:
**AL AT BE BG CH CY CZ DK EE ES FI FR GB GR HR HU IE IS IT LI LT LU LV MC MK MT NL NO PL PT RO RS SE SI SK SM TR**

(30) Priorität: **14.09.2011 DE 102011113130**

(43) Veröffentlichungstag der Anmeldung:
**23.07.2014 Patentblatt 2014/30**

(73) Patentinhaber: **Heraeus Quarzglas GmbH & Co. KG**
**63450 Hanau (DE)**

(72) Erfinder:
• **BECKER, Klaus**
**63452 Hanau (DE)**

• **HOFMANN, Achim**
**60599 Frankfurt (DE)**
• **HÜNERMANN, Michael**
**63755 Alzenau (DE)**
• **SCHENK, Christian**
**55218 Ingelheim (DE)**

(74) Vertreter: **Staudt, Armin Walter**
**Sandeldamm 24a**
**63450 Hanau (DE)**

(56) Entgegenhaltungen:
WO-A2-2010/055439    DE-A1- 10 020 322
DE-A1-102010 008 162    US-A- 5 421 322

**Beschreibung**

Technischer Hintergrund

Die Erfindung betrifft einen Solarstrahlungsempfänger mit einer Kammer zwecks Durchleitung eines Arbeitsgases zur Wärmeaufnahme an einem Absorber für Solarstrahlung, der in der Kammer angeordnet ist und der ein kuppelförmiges Eintrittsfenster aus Quarzglas für die Solarstrahlung aufweist, wobei das Eintrittsfenster eine dem Absorber zugewandte und eine in Betrieb nominale Innentemperatur $T_i$ von mindestens 950 °C aufweisende Innenseite, sowie eine dem Absorber abgewandte und einer Umgebungstemperatur $T_u$ ausgesetzte Außenseite aufweist.

Stand der Technik

Solarstrahlungsempfänger, auch als Solarreceiver bezeichnet, dienen zur solarthermischen Gewinnung von Wärme und werden im industriellen Bereich beispielsweise zur Reformierung kohlenstoffhaltiger Verbindungen zu Methan oder als "solarthermische Kraftwerke" zum Erhitzen von Luft für den Antrieb von Gasturbinen eingesetzt.

Bei einer gängigen Bauart dieser Anlagen sind Eintrittsfenster aus Quarzglas vorgesehen, um einen durch konzentrierte Sonnenstrahlung aufzuheizenden Raum von der Umgebung zu trennen. Über das Eintrittsfenster tritt die Solarstrahlung in einen so genannten Absorber ein, der von einem Arbeitsgas durchströmt wird und dieses dabei solarthermisch auf hohe Temperaturen aufheizt.

Das Eintrittsfenster ist hohen Temperaturbelastungen ausgesetzt. Die dem Absorber zugewandte Innenseite des Eintrittsfensters heizt sich ohne Gegenmaßnahmen in etwa auf die nominale Absorbertemperatur auf. Die dem Absorber abgewandte Fensteraußenseite ist zwar der viel niedrigeren Umgebungstemperatur ausgesetzt, die sich infolge der Atmosphärentemperatur und der Sonneneinstrahlung einstellt. Durch Wärmeleitung heizt sich jedoch auch die Fenster-Außenseite auf Temperaturen von mehreren 100 Grad Celsius auf.

Die hohe Temperatur an der Außenseite des Eintrittsfensters kann - begünstigt durch Verunreinigung der Oberfläche, wie etwa durch alkalihaltige Stäube und Aerosole, und anderen Umwelteinflüssen - eine Entglasung des Quarzglases verursachen. Diese Kristallisation führt zu einer Verringerung der optischen Transmission bis hin zum Bruch und bestimmt letztlich die Lebensdauer des Eintrittsfensters. Regelmäßige Wartungsarbeiten, Austausch und Reparaturen sind logistisch aufwändig und teuer und begrenzen die Wirtschaftlichkeit der Anlage. Daher liegt ein besonderes Augenmerk darauf, Entglasungen des Eintrittsfensters zu vermeiden.

Durch Einsatz von hochreinem, insbesondere alkalifreiem Quarzglas kann die Kristallisationsneigung vermindert werden. Weitere technische Maßnahmen zielen darauf ab, die Fensteroberfläche besonders sauber zu halten - etwa durch häufiges, intensives Reinigen oder - sofern überhaupt möglich - durch Gewährleisten einer partikelfreien Umgebung, wie etwa in Reinräumen.

Alternativ oder ergänzend dazu wird versucht, die Kristallisationsneigung des Eintrittsfensters durch niedrige Temperatur zu vermindern, wie beispielsweise in der EP 1 610 073 A2, aus der ein Solarstrahlungsempfänger der eingangs genannten Art bekannt ist. Innerhalb einer Kammer ist der Absorber angeordnet und von einem kuppelförmigen Eintrittsfenster nach außen abgeschlossen, wobei die konvex gekrümmte Oberfläche (die "Kuppel") des Eintrittsfensters in den Absorber-Innenraum hineinragt. Durch seine kuppelförmige Ausbildung wird die Rückreflexion von Strahlung aus dem Absorber verringert.

Um die Temperatur des Eintrittsfensters unterhalb von 800 °C bis 850 °C zu halten, wird vorgeschlagen, das Eintrittsfenster vor der Infrarotstrahlung des Absorbers mittels eines Infrarotstrahlungsschildes abzuschirmen. Vorzugsweise besteht der Infrarotstrahlungsschild aus Infrarotstrahlung absorbierendem Quarzglas. Ergänzend dazu wird die Innenseite des Eintrittsfensters mittels einer geführten Luftströmung zwangsgekühlt.

Die Abschirmung der Infrarotstrahlung durch den Infrarotstrahlungsschild kann jedoch die Energieaufnahme des Arbeitsgases vermindern und Effizienzverluste erzeugen. Eine Zwangskühlung ist konstruktiv aufwändig und erfordert zusätzlichen Energieaufwand für die Erzeugung der Luftströmung. Diese Maßnahmen können somit die Effizienz der solarthermischen Aufheizung insgesamt verringern.

In der WO 2010/055439 A2 wird ein Solarstrahlungsempfänger gemäß dem Oberbegriff des Anspruchs 1 offenbart, bei dem auf eine aktive Kühlung des Strahlungseintrittsfensters des Absorbers verzichtet wird. Stattdessen wird vorgeschlagen, das Strahlungseintrittsfenster aus einem IR-Strahlung besonders stark emittierenden Quarzglas zu fertigen. Die gewünschte IR-Emission des Quarzglases soll eine Kühlung des Eintrittsfensters bewirken. Sie wird durch einen hohen Gehalt an Hydroxylgruppen (OH-Gruppen) erreicht, der bevorzugt mindestens 600 Gew.-ppm beträgt.

Hydroxylgruppen in Quarzglas zeigen zwar in einem schmalen Ausschnitt des infraroten Wellenlängenspektrums von etwa 2680 nm bis 2800 nm eine ausgeprägte Absorption beziehungsweise Emission. Aber auch hydroxylgruppenarmes Quarzglas ist im längerwelligen Infrarot-Spektralbereich teilweise opak, so dass die ergänzende Absorption durch Hydroxylgruppen einen eher geringen zusätzlichen Kühlungseffekt erbringt. Darüber hinaus nimmt mit dem Hydroxylgruppengehalt des Quarzglases dessen Kristallisationsneigung zu.

Häufig sind die Eintrittsfenster kuppelförmig ausgebildet, so auch im oben genanten Stand der Technik. Die Herstellung derartiger kuppelförmiger Quarzglas-Eintrittsfensters erfolgt mittels glasbläserischer Methoden. Dabei wird beispielsweise von einem Quarzglasrohr ausgegangen, dieses aufgeblasen und dabei zu einem dünnwandigeren Hohlkörper umgeformt. Wegen der Verformungseigenschaften von Quarzglas und seiner hohen Viskosität (auch bei Sublimationstemperatur von $SiO_2$) ist dabei in der Regel die gewünschte Endform nicht direkt erreichbar, und es ist häufig erforderlich, den Hohlkörper in Teilstücke zu zerlegen und diese zu einer Vorform mit einer annähernden Geometrie des Eintrittsfensters neu zusammenzusetzen. Dabei werden die Teilstücke verschweißt und die so erhaltene Vorform wird nach einer mechanischen Endbearbeitung abschließend bei hoher Temperatur getempert, um mechanische Spannungen abzubauen.

Auf diese Art und Weise wird ein kuppelförmiges Bauteil aus Quarzglas mit hoher optischer Qualität erhalten. Es liegt aber auf der Hand, dass mittels dieser Herstellungsmethode trotz hohem Zeit- und Energieaufwand nur Unikate mit geringer Reproduzierbarkeit in ihren geometrischen und mechanischen Eigenschaften herstellbar sind.

In der DE 102 13 539 A1 werden mehrere Herstellungsverfahren für opakes bis transparentes, dotiertes Quarzglas für Bauteile in der Halbleiterfertigung beschrieben. Dabei werden Ausgangspulver aus Si02 und dem Dotierstoff aufgeschichtet und dabei direkt verglast. Beispielsweise werden die Ausgangspulver kontinuierlich in eine rotierende metallische Schmelzform eingestreut und direkt mittels Plasmabrenner verglast. Auf diese Weise werden Barren aus dem dotierten Quarzglas erhalten.

Die DE 10 2008 033 946 B3 beschreibt ein übliches Vakuum-Schmelzverfahren für die Herstellung von Quarzglas-Tiegeln. Hierbei werden auf der Innenwandung einer metallischen Schmelzform hintereinander zwei jeweils 12 mm dicke $SiO_2$-Körnungsschichten aus Quarzsand beziehungsweise aus synthetischer Körnung aufgeschichtet und diese Körnungsschichten mittels Plasma und unter Vakuum gesintert. Die innere Körnungsschicht sintert dabei zu einer Innenschicht aus transparentem Quarzglas, die äußere Körnungsschicht zu opakem Quarzglas. Ergebnis ist ein Quarzglastiegel mit opaker Außenwandung und einer Innenschicht aus transparentem Quarzglas.

Technische Aufgabe

Grundsätzlich nimmt der Wirkungsgrad der Energieumwandlung im Solarstrahlungsempfänger mit der Absorbertemperatur (=Auslasstemperatur) zu. Daher werden an und für sich besonders hohe Absorbertemperaturen angestrebt. Andererseits müssen die Eintrittsfenster eine hohe Langzeitstabilität aufweisen, um einen sinnvollen Einsatz in Solarstrahlungsempfängern zu ermöglichen. Für Eintrittsfenster aus Quarzglas ist hier die oben erwähnte Entglasung der Umgebungseinflüssen ausgesetzten Außenseite besonders kritisch. Da derartige Kristallisationen bei Temperaturen oberhalb einer Grenztemperatur zunehmend auftreten, die im Bereich von etwa 800 °C bis maximal 850°C liegt, limitiert diese Grenztemperatur an der Außenseite des Eintrittsfensters die möglichen Absorbertemperaturen.

Der Erfindung liegt die Aufgabe zugrunde, einen Solarstrahlungsempfänger mit einem Eintrittsfenster aus Quarzglas bereitzustellen, bei dem eine hohe Absorbertemperatur einstellbar ist und der damit eine hohe Effizienz der solarthermischen Aufheizung ermöglicht, und zwar ohne eine Vergrößerung der Gefahr einer Entglasung im Bereich der Außenseite des Eintrittsfensters.

Allgemeine Darstellung der Erfindung

Hinsichtlich des Solarstrahlungsempfängers wird diese Aufgabe ausgehend von einem Solarstrahlungsempfänger der eingangs genannten Gattung erfindungsgemäß dadurch gelöst, dass das Eintrittsfenster eine Wandstärke d mit einem maximum im Bereich einer Kuppelmitte (25) hat, die in Abhängigkeit von Ti und Tu so ausgelegt ist, dass sich in Betrieb im Bereich der Eintrittsfenster-Außenseite eine Temperatur Ta von weniger als 850 °C einstellt, mit den zusätzlichen Maßgaben, dass die Temperaturdifferenz Ti-Ta mindestens 150 °C und die Wandstärke d im Bereich eines Maximums der Innentemperatur Ti mindestens 7 mm .

Beim Einsatz des Solarstrahlungsempfängers wird das Eintrittsfenster überwiegend von der Absorberseite her aufgeheizt. Durch Wärmeleitung im Fenster und Wärmeübergang auf der Fenster-Außenseite in Richtung Umgebung stellt sich eine stationäre Temperaturverteilung ein.

Die Erfindung zielt darauf ab, das Aufheizen der prozessabgewandten, atmosphärenseitigen Außenseite des Eintrittsfensters durch die Dicke der Fensterwandung zu begrenzen. Bei der erfindungsgemäßen Modifikation der bisher bekannten Eintrittsfenster wird daher die Fensterdicke so ausgelegt, dass sich über die Fensterwandung von der heißen Innenseite ein Temperaturgradient einstellt, der über die Fensterdicke eine Temperaturdifferenz Ti-Ta von 150 °C oder mehr bewirkt, so dass sich jedenfalls im thermischen stationären Gleichgewicht auf der kühleren Außenseite eine Temperatur unterhalb von 850 °C ergibt. Bezüglich der Einstellung der Temperatur Ta im stationären Gleichgewicht liefert die Wandstärke d einen zusätzlichen, bisher nicht beachteten Freiheitsgrad. Mit anderen Worten, durch die Freiheit in der Einstellung des Temperaturgradienten ist die Temperatur Ta der Fenster-Außenseite von der Temperatur Ti an der dem Absorber zugewandten Fenster-Innenseite entkoppelt, so dass sie in jedem Fall unterhalb von 850 °C bleiben kann. Damit wird eine gewisse Unempfindlichkeit der Außenseite gegenüber Kristallisation erreicht. Andererseits erlaubt die genannte Entkopplung auch vergleichsweise höhere Temperaturen an der Fenster-Innenseite und führt damit zu einer höheren Effizienz der Energieumwandlung, indem durch eine größere Fensterdicke die im gegebenen Fall erforderliche Temperaturdifferenz und einen flachen Temperaturgradienten erzeugt und damit die Überschreitung der Grenztemperatur an der Fenster-Außenseite verhindert wird. Darüber hinaus führt ein flacherer Temperaturgradient auch zu einer geringeren Wärmeableitung über das Eintrittsfenster und damit zu einem geringeren Energieverlust.

Je höher die Nominaltemperatur des Absorbers ist, umso größer ist die erforderliche Wandstärke des Eintrittsfensters. Das dafür geeignete, hochreine Quarzglas ist jedoch teuer und durch seine Dickwandigkeit sind zusätzliche Transmissionsverluste der Solarstrahlung in Kauf zu nehmen. Diese Nachteile werden aber durch die höhere Unempfindlichkeit der Außenseite gegenüber Kristallisation und die damit einhergehende längere Lebensdauer des Fensters und den geringeren Aufwand für Wartung und Austausch kompensiert. Auf die aus dem Stand der Technik bekannten Kühlungsmaßnahmen, wie eine aktive Luftkühlung oder eine Abschirmung des Eintrittsfensters vor Infrarotstrahlung kann verzichtet werden.

Somit ermöglicht die erfindungsgemäße Modifikation des Standes der Technik die Einstellung einer hohen Absorbertemperatur und damit einer hohen Effizienz der solarthermischen Aufheizung, ohne dadurch die Gefahr der Entglasung im Bereich der Außenseite des Eintrittsfensters zu erhöhen.

Die Mindestdicke des Eintrittsfensters hängt im Wesentlichen von der Temperatur Ti an der Fenster-Innenseite ab. Diese Temperatur ist in der Regel bekannt oder sie ist bestimmbar und beträgt mindestens 950 °C. Im Fall einer gleichmäßigen Temperaturverteilung über der Fenster-Innenseite entspricht diese Temperatur gleichzeitig dem "Maximum" der Innentemperatur Ti. Beim bestimmungsgemäßen Einsatz des Solarstrahlungsempfängers kann sich aber auch ein inhomogener Verlauf der Temperatur Ti über der Innenseite des Eintrittsfensters ergeben, beispielsweise mit einem Maximum im zentralen Bereich der einfallenden Solarstrahlung.

Im einfachsten Fall hat das Eintrittsfenster eine einheitliche Dicke. Bei uneinheitlicher Dicke richten sich Betrag und Position der Mindestdicke nach dem Temperaturmaximum an der Fenster-Innenseite.

Im Hinblick auf eine möglichst geringe Kristallisationsneigung der Fenster-Außenseite hat es sich bewährt, wenn das Eintrittsfenster eine Wandstärke d hat, die in Abhängigkeit von Ti und Tu so ausgelegt ist, dass sich im Bereich der Außenseite eine Temperatur Ta von weniger als 800 °C, vorzugsweise weniger als 750 °C einstellt.

"Tu" repräsentiert hierbei die außerhalb des Solarstrahlungsempfängers herrschende Umgebungstemperatur, die im einfachsten Fall als Standard-Raumtemperatur (= 25 °C) angenommen werden kann.

Vorzugsweise beträgt die Wandstärke d im Bereich der maximalen Innentemperatur Ti mindestens 10 mm, besonders bevorzugt mindestens 20 mm.

Bei gegebener Maximaltemperatur Ti im Bereich der Fenster-Innenseite ist die Temperatur Ta im Bereich der Außenseite umso niedriger je größer die Wandstärke d ist. Andererseits erlaubt bei gegebener Temperatur Ta im Bereich der Außenseite eine dickere Wandstärke des Eintrittsfensters eine umso höhere Absorber-Temperatur Ti an der Innenseite und ermöglicht so einen höheren Wirkungsgrad des Solarstrahlungsempfängers.

Eine geeignete Dicke d des Eintrittsfensters ist anhand von Versuchen ermittelbar. Für eine Abschätzung hat es sich bewährt, wenn die Wandstärke d im Bereich der maximalen Innentemperatur Ti anhand folgender Bemessungsregel ausgelegt ist:

$$d > \lambda(Ti-Ta) / \alpha(Ta-Tu) \qquad (1),$$

wobei: $\lambda$ = Wärmeleitungskoeffizient von transparentem Quarzglas, und
$\alpha$ = Wärmeübergangskoeffizient Quarzglas/Luft bei Konvektion

Für den Wärmeleitungskoeffizienten von transparentem Quarzglas wird in der Literatur ein Wert $\lambda$ = 1,4 W/(m·K) genannt. Der Wärmeübergangskoeffizient Quarzglas/Luft hängt von der Strömungsgeschwindigkeit der Luft ab. Bei einer Strömungsgeschwindigkeit von 10 m/s ergibt sich ein Wert von $\alpha$ = 36 W/(m²·K), der zur Abschätzung der Wandstärke gemäß Gleichung (1) geeignet ist.

Die Umgebungstemperatur "Tu" liegt in erster Näherung bei Standard-Raumtemperatur. "Ta" ergibt sich aufgrund der spezifischen Anforderungen an die Kristallisationsfreiheit und die Lebensdauer des Eintrittsfensters und beträgt maximal 850 °C. Die Temperatur "Ti" an der Fenster-Innenseite entspricht in erster Näherung der Absorber-Temperatur, mit der zusätzlichen Maßgabe, dass sie um mindestens 150 °C höher ist als Ta. Im Fall Ta = 850 °C ist Ti ≥1000 °C.

Diese Bemessungsregel ergibt sich aufgrund folgender Überlegungen:

Das Eintrittsfenster heizt sich in erster Linie durch den Kontakt mit der heißen Luft im Absorber auf. Eine weitere Wärmequelle ist die Wärmestrahlung des Absorbers, die auf das Eintrittsfenster trifft. Aufgrund des spektralen Profils dieser Wärmestrahlung wird sie teilweise im Eintrittsfenster absorbiert, so dass sich dieses erwärmt. Die vergleichsweise größere Dicke des Fensters verringert den Energieverlust durch Wärmeleitung und durch Wärmestrahlung.

In erster Näherung tritt im stationären Zustand dieselbe Wärmemenge, die durch Wärmeleitung durch das Fenster transportiert wird, an der Außenwandung an die Umgebung über. Damit können die Gleichung für die Wärmeleitung und die Gleichung für den Wärmeübergang gleich gesetzt werden, so dass gilt:

$$\frac{dQ}{dt} = \frac{\lambda}{d}(T_i - T_a) = \alpha * (T_a - T_u) \qquad (2)$$

Durch Umstellung ergibt sich daraus die obige Bemessungsregel nach Gleichung (1). Mit zunehmender Fensterdicke d nimmt die Wärmeleitung über das Eintrittsfenster leicht ab, wodurch sich der Wärmeverlust des Absorbers verringert. Die Temperatur Ta auf der Fensteraußenseite nimmt mit größeren Wandstärken deutlich ab. Ab einer Wandstärke, die mehr als dem 2-fachen des Quotienten von Gleichung (1) entspricht, ergeben sich zunehmend Nachteile bezüglich Gewicht, Kosten und optischer Transmission, die durch den Vorteil der niedrigeren Temperatur Ta nicht mehr hinreichend kompensiert werden.

In der Regel zeigt der Temperaturverlauf über der Innenseite ein Maximum in der Mitte des Eintrittsfensters. Insbesondere im Hinblick hierauf hat sie eine Ausführungsform des Solarstrahlungsempfängers bewährt, bei der die Wandstärke d des Eintrittsfensters ein Maximum im Bereich einer Kuppelmitte hat.

Die Wandung des Eintrittsfensters zeigt dabei ein nicht gleichmäßiges, sondern inhomogenes Wandstärkenprofil mit einem Maximum im Bereich der Kuppelmitte, was im einfachsten Fall der in etwa der Fenstermitte entspricht. Dadurch werden die oben erwähnten Nachteile des dickwandigen Fensters in Bezug auf Materialkosten und Transmissionsverlusten minimiert.

Im Hinblick hierauf hat es sich bewährt, wenn die Wandstärke im Maximum um mindestens 20 %, vorzugsweise um mindestens 50 % größer ist als im Bereich eines Minimums.

Insbesondere im Hinblick auf eine geringe Kristallisationsneigung weist das Quarzglas des Eintrittsfensters einen mittleren Hydroxylgruppengehalt von weniger als 100 Gew.-ppm, vorzugsweise von weniger als 30 Gew.-ppm auf.

Ein Verfahren zur Herstellung eines derartigen kuppelförmigen Eintrittsfensters aus Quarzglas, insbesondere für einen Solarstrahlungsempfänger, umfasst folgende Verfahrensschritte:

(a) Bereitstellen einer kuppelförmigen Schmelzform mit poröser Wandung,
(b) Einbringen von $SiO_2$-Körnung in die Schmelzform und Ausbilden einer kuppelförmigen $SiO_2$-Körnungsschicht mit einer Dicke von mindestens 12 mm an der Schmelzform-Innenwandung,
(c) Verdichten der $SiO_2$-Körnungsschicht unter Einwirkung eines Plasmas und unter Anlegen eines von außen durch die poröse Wandung zur Körnungsschicht durchgreifenden Unterdrucks unter Bildung eines Rohlings des Eintrittsfensters,
(d) mechanisches Abtragen eines Außenbereichs des Rohlings unter Bildung einer Vorform des Eintrittsfensters, und
(e) mechanisches oder thermisches Polieren der Vorform zu dem Eintrittsfenster aus transparentem Quarzglas.

Das Verfahren ermöglicht die Herstellung eines einstückigen Eintrittsfensters aus Quarzglas ohne Schweißnähte in Kuppelform, wie etwa in Form eines Kugelabschnitts, eines Hyperboloids oder eines elliptischen Paraboloids.

Im Unterschied zum bisherigen Verfahren wird beim obengenannten Verfahren nicht von vorgefertigten Quarzglas-Bauteilen ausgegangen, sondern von einer $SiO_2$-Körnung, die in einem Form- und Verglasungsverfahren unmittelbar zu einer Vorform mit den ungefähren Abmessungen des kuppelförmigen Eintrittsfensters geformt wird. Weitere Umformschritte, wie etwa ein Aufblasen von Rohren, ein Zusammenfügen von Teilen und dergleichen, sind nicht erforderlich.

Insbesondere wegen der geringen Wärmeleitfähigkeit von Quarzglas ist die reproduzierbare Herstellung dickwandiger gekrümmter Quarzglas-Bauteile schwierig. Das erfindungsgemäße Verfahren beseitigt diese Probleme. Der Einsatz der Schmelzform und das Ausformen der $SiO_2$-Körnungsschicht an der Innenseite derselben gewährleistet eine reproduzierbare Formgebung. So bildet beispielsweise die Innenseite der $SiO_2$-Körnungsschicht nach dem Verdichten, Verglasen und etwaigen Säuberungsschritten die Innenseite des kuppelförmigen Eintrittsfensters.

Das Einbringen der $SiO_2$-Körnung in die Schmelzform erfolgt beispielsweise unter Einsatz einer Schablone, mittels der die Körnung an die Innenwandung der um ihre Mittelachse rotierenden Schmelzform gepresst wird und/oder unter Wirkung der Gravitation bei rotierender Schmelzform. Die Körnungsschicht wird entweder unmittelbar auf die Innenwandung der Schmelzform oder auf die Innenwandung einer dort bereits vorhandenen Quarzglasschicht aufgebracht. Die Schablone ist so geformt, dass sich die gewünschte Schichtdickenverteilung der Körnungsschicht ergibt; im einfachsten Fall wird eine gleichmäßige Schichtdicke der Körnungsschicht erzeugt. Alternativ dazu kann die $SiO_2$-Körnung auch in die Schmelzform eingestreut und dabei gleichzeitig unter der Einwirkung des Plasmas erweicht und gegen die Innenwandung der Schmelzform geschleudert werden.

Die Dicke der SiO$_2$-Körnungsschicht setzt sich aus einem Anteil zusammen, der die Soll-Wandstärke des Eintrittsfensters zuzüglich eines etwaigen Aufmaßes ergibt und einem weiteren Anteil, der bei der Entnahme des Rohlings als Restschicht in der Schmelzform verbleibt. Für die Erzeugung des dickwandigen Eintrittsfensters gemäß der Erfindung ist es wichtig, dass die Körnungsschicht eine dementsprechend große Dicke hat, so dass sich unter Berücksichtigung der Schütt- oder Stampfdichte der Körnungsschicht nach dem Verglasen und etwaigem Abtrag durch mechanische Nachbearbeitung eine Mindestdicke des Fensters von 7 mm ergibt. Um dies zu gewährleisten, wird gemäß der Erfindung eine Körnungsschicht erzeugt, die mindestens in demjenigen Bereich, aus dem im fertigen Eintrittsfenster die Mindestwandstärke von 7 mm, vorzugsweise mindestens 10 mm und besonders bevorzugt mindestens 20 mm entstehen soll, eine Schichtdicke von 12 mm oder mehr hat, vorzugsweise 20 mm oder mehr.

Das Verglasen der SiO$_2$-Körnungsschicht erfolgt ausgehend von ihrer Innenseite. Sie kann zusätzlich ausgehend von ihrer Außenseite verglast werden. Beim Verglasen von der Innenseite aus (hier auch als "Verdichten" bezeichnet) wird ein Plasma eingesetzt, das in den Schmelzform-Innenraum eingeführt wird und mittels der die Körnungsschicht auf hohe Temperatur erhitzt wird. Dabei wandert eine Schmelzfront von der Innenseite der SiO$_2$-Körnungsschicht allmählich nach außen. Das Verdichten wird in der Regel abgebrochen, bevor diese Schmelzfront die Innenwandung der Schmelzform erreicht hat.

Da von teilchenförmigem Si02 ausgegangen wird, liegt eine besondere Herausforderung beim Verfahren darin, die SiO$_2$-Körnung zu transparentem Quarzglas zu verglasen. Dazu trägt wesentlich bei, dass beim Verdichten der SiO$_2$-Körnungsschicht ein Unterdruck angelegt wird, durch den Gase über die gasdurchlässige Schmelzform-Wandung aus der Körnungsschicht abgezogen werden, die ansonsten zu einer Blasenbildung führen können.

Es wird ein kuppelförmiger Rohling aus Quarzglas erhalten, der an seiner Innenseite im Wesentlichen blasenfrei ist und der in Richtung der Außenseite zunehmend Poren aufweist. Dieser Rohling ist noch ungeeignet für einen Einsatz mit hohen Anforderungen an die optische Transmission.

Der nicht vollständig verdichtete Außenbereich des Rohlings wird soweit mechanisch abgetragen, dass eine Vorform erhalten wird, die im Wesentlichen bereits die Form und die Sollabmessungen des Eintrittsfensters, insbesondere die vorgesehene Wandstärke und Kontur, aufweist. Da das dabei abgetragene Quarzglas nicht vollständig verdichtet ist, genügt ein relativ geringer Energieaufwand zum Abtragen. Die so erhaltene Vorform weist jedoch noch rauhe Außenbereiche auf, und wird daher anschließend mechanisch oder thermisch - durch Feuerpolitur - geglättet. Beim Polieren ändern sich die Abmessungen der Vorform kaum noch.

Auf diese Weise ist ein Eintrittsfenster aus transparentem Quarzglas insbesondere für einen Solarabsorber mit hoher Maßhaltigkeit kostengünstig und reproduzierbar herstellbar.

Bei einer bevorzugten Verfahrensvariante umfasst das Verdichten der Si02-Körnungsschicht gemäß Verfahrensschritt (c) einen zweistufigen Prozess, mit einer ersten Prozessstufe, während der ein innerer Bereich der SiO$_2$-Körnungsschicht verdichtet und ein geringerer Unterdruck angelegt wird, und mit einer zweiten Prozessstufe, während der ein höherer Unterdruck angelegt und die SiO$_2$-Körnungsschicht weiter verdichtet wird.

Infolge ihrer relativ hohen Sinteraktivität setzt das Verdichten der SiO$_2$-Körnung bereits früh ein. Dadurch wird an der Innenseite der Körnungsschicht eine dichte "Versiegelungsschicht" mit definierter, dünner Wandstärke auf einem durchgehend porösen Untergrund erzeugt. Nach Ausbildung der dichten "Versiegelungsschicht" wird die Stärke des Unterdrucks erhöht, so dass Gase aus dem noch porösen Bereich der Körnungsschicht entfernt werden, und in der zweiten Heizstufe wird daraufhin dieser Bereich der Körnungsschicht bei höherer Temperatur verdichtet.

Zur Herstellung eines Eintrittsfensters mit inhomogenem Wandstärkeverlauf hat sich eine Verfahrensweise bewährt, bei der beim Verdichten der SiO$_2$-Körnungsschicht gemäß Verfahrensschritt (c) ein kuppelförmiger Rohling gebildet wird, der im Bereich einer Kuppelmitte ein Maximum seiner Wandstärke aufweist, das um mindestens 20%, vorzugsweise um mindestens 50% größer ist als im Bereich einer minimalen Wandstärke..

Beim mechanischen Abtragen des Rohling-Außenbereichs wird vorzugsweise eine Vorform mit einer zur Innenseite korrespondierenden kuppelförmigen Außenseite und mit einer maximalen Wandstärke von mindestens 7 mm, vorzugsweise mindestens 10 mm und besonders bevorzugt mindestens 20 mm erzeugt. Es hat sich bewährt, wenn das Polieren der Vorform zu dem Eintrittsfenster aus transparentem Quarzglas durch Erhitzen auf eine Temperatur von mindestens 1600 °C mittels eines Brenners mit Verbrennungsflamme erfolgt.

Dabei wird der noch rauhe Oberflächenbereich der vorab mechanisch bearbeiteten Vorform von außen mittels eines Brenners oder mehrerer Brenner erhitzt, indem ein Brennstoff, wie Wasserstoff, Acetylen oder Propan, mit Sauerstoff verbrannt wird. Mittels eines derartigen Brenners lassen sich lokal hohe Temperaturen erzeugen, die zum Transparentsintern des noch rauhen Teils der Vorform ausreichen, ohne dass es dabei zu nennenswerten Verformungen kommt. Temperatur und Heizdauer beim Verglasen werden dabei so eingestellt, dass das Quarzglas nach dem Verglasen im Wellenlängenbereich zwischen 300 nm und 2400 nm eine hohe innere Transmission von mindestens 95% aufweist (bezogen auf eine Schichtdicke von 1 mm).

Zu einer hohen Transparenz trägt auch eine bevorzugte Verfahrensvariante bei, bei der eine Schmelzform eingesetzt wird, bei der die gasdurchlässige Wandung aus Grafit besteht, und bei der das Verdichten der SiO$_2$-Kör-

nungsschicht gemäß Verfahrensschritt (c) in einer Helium und/oder Wasserstoff enthaltenden Atmosphäre erfolgt

Die Schmelzform hat eine gasdurchlässige Wandung, die beispielsweise aus porösem Grafit besteht. Alternativ oder ergänzend dazu ist die Wandung die mit einer Vielzahl von Durchgangsbohrungen versehen. Der Werkstoff Grafit erleichtert einerseits die Entnahme des Rohlings nach dem Verfestigen und die Grafit-Wandung ist besonders einfach in poröser Form herstellbar oder mit Durchgangsbohrungen zu versehen.

Helium und Wasserstoff gehören zu den in Quarzglas schnell diffundierenden Gasen. Ein Austausch der in der Körnungsschicht üblicherweise vorhandenen Luft durch diese Gase vermindert sowohl die Blasenbildung als auch das Blasenwachstum in der Körnungsschicht beim Verdichten und Verglasen.

Das Verdichten der $SiO_2$-Körnungsschicht erfolgt dabei vorzugsweise in einem strömungsoffenen System, wobei Helium und/oder Wasserstoff der Schmelzform kontinuierlich als geregelter Gasstrom zugeführt wird. Das strömungsoffene System ermöglicht nicht nur eine Gasströmung innerhalb der Schmelzform, sondern lässt auch eine aus der Schmelzform heraus gerichtete Gasströmung zu. Dadurch wird der Austrag von verunreinigtem Gas oder abgedampftem Material aus der Schmelzform erleichtert. Unerwünschte Niederschläge werden so verhindert und Verunreinigungen reduziert.

In dem Zusammenhang hat es sich auch bewährt, wenn zwischen dem Verfahrensschritt der Ausformen einer $SiO_2$-Körnungsschicht und dem Verfahrensschritt des Verdichtens eine Gasanreicherung der $SiO_2$-Körnungsschicht vorgesehen ist, bei dem die Atmosphäre in der Schmelzform durch die Helium und/oder Wasserstoff enthaltende Atmosphäre angereichert wird.

Durch diese Gasanreicherung vor dem Verdichten der Körnungsschicht wird der Gehalt an Luft (beziehungsweise Stickstoff) in der Schicht verringert, so dass der Einsatz an den relativ teuren Gasen Helium und/oder Wasserstoff während des Verdichtens effektiver ist und die so erzeugte Schicht eine besonders geringe Blasendichte aufweist.

Ausführungsbeispiel

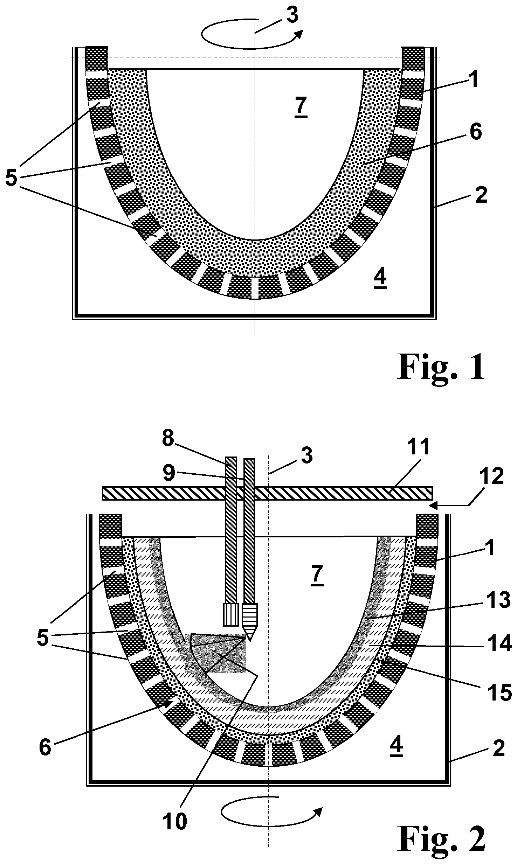

Die Erfindung wird nachfolgend anhand von Ausführungsbeispielen und einer Zeichnung näher erläutert. Die Figuren 1 bis 4 zeigen in schematischer Darstellung Verfahrensschritte bei der Durchführung des Verfahrens zur Herstellung eines paraboloidförmigen Eintrittsfensters aus Quarzglas für einen Solarstrahlungsempfänger gemäß der Erfindung. Im Einzelnen zeigt:

Figur 1    das Ausbilden einer $SiO_2$-Körnungsschicht in einer Schmelzform,
Figur 2    das Verdichten der $SiO_2$-Körnungsschicht mittels eines Plasmas,
Figur 3    eine verdichtete Vorform für das Eintrittsfenster nach dem Entformen und einem Abschleifen der Außenseite,
Figur 4    das Erzeugen einer transparenten Wandung der Vorform durch Erhitzen mittels eines Brenners,
Figur 5    das nach dem Verfahren erhaltene Eintrittsfenster, und
Figur 6    ein Diagramm zur Ermittlung der erforderlichen Mindest-Wandstärke des Eintrittsfensters in Abhängigkeit von der nominalen Absorber-Temperatur.

Figur 1 zeigt eine Schmelzform 1 aus Grafit mit einem maximalen Innendurchmesser von 100 cm, die mit einem Außenflansch auf einem Träger 2 aufliegt, der um die Mittelachse 3 rotierbar ist. Der Raum 4 zwischen Schmelzform 1 und Träger 2 ist evakuierbar. Die Schmelzform-Wandung weist eine Vielzahl von Durchlässen 5 auf, über die ein Vakuum das an der Außenseite der Schmelzform 1 anliegt, nach Innen 7 durchgreifen kann.

In einem ersten Verfahrensschritt wird kristalline Körnung aus natürlichem, hochreinem Quarzpulver in die um ihre Längsachse 3 rotierende Schmelzform 1 eingefüllt. Das Quarzpulver hat eine mehrmodale Teilchengrößenverteilung mit einem Hauptmaximum der Teilchengrößen im Bereich von 50 bis 120 $\mu$m, wobei die mittlere Teilchengröße bei etwa 85 $\mu$m liegt, und mit einem Nebenmaximum der Teilchengrößenverteilung bei einer Teilchengröße um 1 $\mu$m. Unter der Wirkung der Zentrifugalkraft und mittels einer Formschablone wird an der Innenwandung der Schmelzform 1 eine rotationssymmetrische, paraboloidförmige Schicht 6 aus mechanisch verfestigtem Quarzsand geformt. Die mittlere Schichtdicke der Schicht 6 beträgt 18 mm.

In einem zweiten Verfahrensschritt erfolgt eine Anreicherung der in den Körnungsschicht 6 enthaltenen Luft mit einem heliumhaltigen Prozessgas. Hierzu wird die Luft innerhalb der Schmelzform 1 über die gasdurchlässigen Körnungsschicht 6 nach außen abgesaugt und gleichzeitig wird ein Gemisch aus Helium und 20 % Sauerstoff in den Innenraum 7 der Schmelzform 1 eingeleitet. Die offene Oberseite der Schmelzform 1 wird dabei unter Belassung eines Entlüftungsspaltes 12 mit einem Hitzeschild 11 (siehe Figur 2) teilweise abgedeckt. Nach einer Dauer von etwa 10 Minuten wird die Anreicherung mit dem heliumhaltigen Prozessgas beendet.

In einem weiteren, in Figur 2 schematisch dargestellten Verfahrensschritt wird die $SiO_2$-Körnungsschicht 6 zonenweise verdichtet. Hierzu werden nach Abschluss der Gasanreicherung Elektroden 8; 9 in den Innenraum 7 eingeführt, und in der Schmelzform-Atmosphäre aus Helium und Sauerstoff wird zwischen den Elektroden 8; 9 ein Lichtbogen gezündet, der in Figur 2 durch die Plasmazone 10 als grau hinterlegter Bereich gekennzeichnet ist. Dabei wird dem Innenraum 7 weiterhin ein konstanter und geregelter Strom des He/O$_2$-Gemischs von 300 l/min zugeführt, so dass sich innerhalb des Innenraumes 7 eine stabile Gasströmung zwischen dem (nicht dargestellten) Gaseinlass im Hitzschild 11 und dem Entlüftungsspalt 12 ausbildet.

Das Verdichten der Körnungsschicht 6 erfolgt in einem zweistufigen Prozess. In der ersten Stufe werden die Elektroden 8; 9 in eine zentrale Position des Innenraums 7 verbracht und mit einer Leistung von etwa 270 kW (200 V, 1350 A) beaufschlagt. Die dadurch erzeugte Hitze im Innenraum 7 in Verbindung mit dem Prozessgas (80He/20O$_2$) genügt zum Sintern der sinteraktiven Teilchen der Körnungsschicht 6, so dass sich deren gesamte Innenseite eine dünne aber dichte Versiegelungsschicht ausbildet, die nicht verschmolzenen Anteile der Körnungsschicht 6 von der Atmosphäre im Schmelzform-Innenraum 7 trennt.

Sobald die Versiegelungsschicht vorhanden ist, beginnt die zweite Verglasungsstufe. Da weiterhin über die Vakuumeinrichtung abgepumpt wird, entsteht im noch nicht verglasten Bereich der Körnungsschicht 6 ein Unterdruck von etwa 200 mbar (absolut). Die Elektroden 8; 9 werden nun mit einer Leistung von 600 kW (300 V, 2000 A) beaufschlagt und in die Nähe der Innenwandung gebracht und nach unten abgesenkt. Auf diese Weise wird gewährleistet, dass die inneren Bereiche der Körnungsschicht 6 mit der Plasmazone 10 als auch mit dem Prozessgas (80He/20O$_2$) erreicht werden. Dabei wandert eine Schmelzfront von Innen nach Außen, so dass an der Innenseite der Körnungsschicht 6 ein Bereich aus transparentem, blasenarmem Quarzglas erhalten wird, wie dies der grau hinterlegte Flächenbereich 13 andeutet. Die dünne, nicht transparente Versiegelungsschicht, die den transparenten inneren Bereich 13 überzieht, wird im weiteren Prozessverlauf durch die Einwirkung des Plasma 10 zumindest teilweise entfernt und erforderlichenfalls am Ende des Herstellungsprozesses durch Sandstrahlen vollständig beseitigt.

Sobald der transparent verglaste innere Bereich 13 eine Dicke von etwa 11 mm erreicht hat und bevor die Schmelzfront die Innenwandung der Schmelzform 1 erreicht, wird der von der Innenseite der SiO$_2$-Körnungsschicht ausgehende Verdichtungsprozess beendet. Der daran anschließende, weiter außen liegende Bereich 14 der ursprünglichen Körnungsschicht 6 ist dabei zu einem porigen Quarzglas verdichtet, wohingegen die äußerste Lage 15 der ursprünglichen Körnungsschicht 6 unverdichtet bleibt.

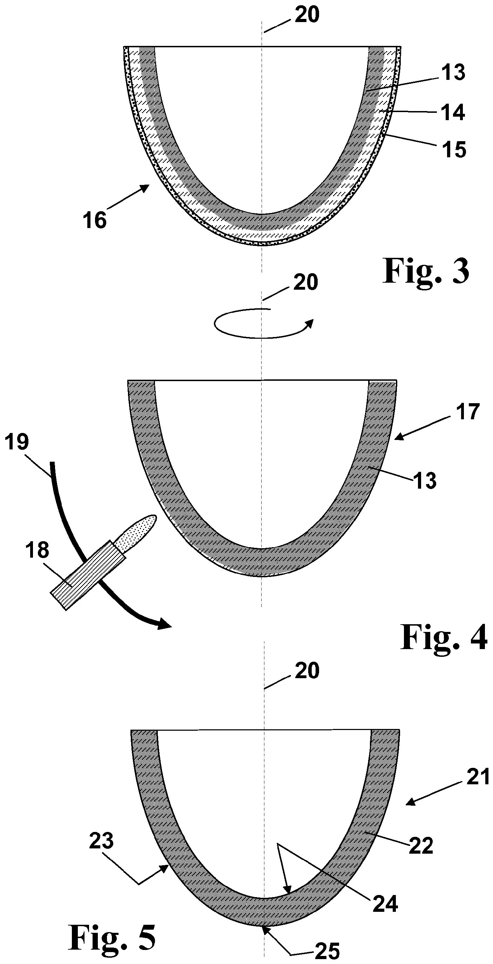

Nach Entnahme aus der Schmelzform 1 wird somit der in **Figur 3** schematisch dargestellte, kuppelförmige Rohling 16 des Eintrittsfensters erhalten. Bei dem Rohling 16 wird der innere Bereich von einer glatten, glasigen und blasenarmen Innenschicht 13 mit einer Dicke von 11 mm aus Quarzglas gebildet ist, der mit einem Außenbereich 14 aus blasenhaltigem Quarzglas fest verbunden ist, an dem teilweise noch unverdichtete Körnung 15 anhaftet. Die anhaftende Körnung 15 wird durch Sandstrahlen entfernt. Der blasenhaltige Außenbereich 14 wird vollständig abgeschliffen, so dass eine kuppelförmige Vorform 17 (siehe Figur 4) aus Quarzglas mit einer gleichmäßigen Wandstärke von etwa 11 mm mit einem Innenbereich 13 aus transparentem Quarzglas erhalten wird.

Wie in **Figur 4** schematisch gezeigt, wird die vom Schleifvorgang noch rauhe Außenoberfläche der Vorform 17 anschließend feuerpoliert. Ein Knallgasbrenner 18 wird entlang der Außenwandung der um ihre Längsachse 20 rotierenden Vorform 17 geführt (wie durch den Richtungspfeil 19 angedeutet) und dabei die Außenwandung lokal auf hohe Temperaturen von mehr als 2000° C erhitzt. Die rauhe Außenoberfläche wird dabei aufgeschmolzen, ohne dass transparente Bereich 13 der Vorform dabei erweicht und nennenswert verformt wird.

Alternativ zu dieser Feuerpolitur wird die rauhe Außenoberfläche durch mechanisches Polieren und Honen geglättet. Dabei wird die Außenwandung der Vorform 17 mittels einer Honmaschine bearbeitet, wobei der Politurgrad fortlaufend verfeinert wird, indem die Honleisten ausgewechselt werden. Die Endbehandlung erfolgt mit einer #800 Honleiste mit einem Abtrag von ca. 60 $\mu$m.

Nach dem Verglasen wird das in **Figur 5** schematisch gezeigte kuppelförmige Eintrittsfenster 21 aus vollständig transparentem Quarzglas erhalten, das eine Wandung 22 mit einer einheitlich Wanddicke von etwa 11 mm aufweist. Das Quarzglas des Eintrittsfensters 21 hat einen mittleren Hydroxylgruppengehalt von weniger als 50 Gew.-ppm und weist im Wellenlängenbereich von 300 bis 2400 nm eine innere Transmission von mehr als 95 % (bezogen auf eine Schichtdicke von 1mm) auf. Im Einbauzustand ist die Innenseite 23 dem Absorber des erfindungsgemäßen Solarstrahlungsempfängers zugewandt und die Außenseite 24 ist der Umgebung ausgesetzt. Die Kuppelmitte des Eintrittsfensters 21 beziehungsweise der Scheitelpunkt der Kuppel sind mit der Bezugsziffer 25 gekennzeichnet.

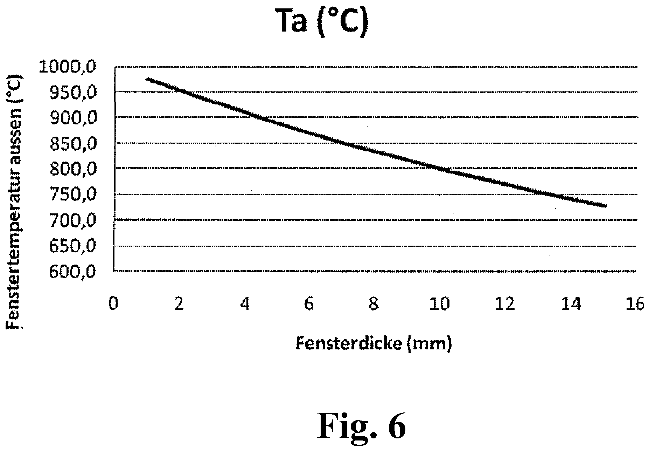

Im Diagramm von **Figur 6** ist für den Fall einer Absorbertemperatur Ti von 1000 °C auf der y-Achse die Temperatur Ta in [°C] an der Außenseite 24 des Eintrittsfensters 21 gegen die Wandstärke d in [mm] aufgetragen.

Daraus ergibt sich, dass sich bei einem Eintrittsfenster 21 mit einer Wandstärke von 6 mm, die etwa im Bereich der bisher üblichen Wandstärken liegt, an der Außenseite 24 eine Maximaltemperatur von etwa 870°C einstellt. Bei einer Fenster-Wandstärke von 11 mm, wie im obigen Ausführungsbeispiel, bildet sich über die Fensterwandung ein Temperaturgradient von etwa 220 °C, so dass die Temperatur an der Außenseite 24 nur noch bei 770 °C liegt. Dieser Unterschied von rund 100°C gegenüber der Standard-Wandstärke kann entscheidend für die Langzeitstabilität des Eintrittsfensters sein.

Umgekehrt, erlaubt ein besonders dickwandiges Eintrittsfenster 21 mit einer Wandstärke von 11 mm (und mehr) bei gegebener maximaler Temperatur von beispielsweise 850 °C an der Außenseite 24 um etwa 100°C heißere Prozesstemperaturen an der Fenster-Innenseite 23, was den Wirkungsgrad der Umwandlung in elektrische Energie beträchtlich verbessert.

## Patentansprüche

**1.** Solarstrahlungsempfänger mit einer Kammer zwecks Durchleitung eines Arbeitsgases zur Wärmeaufnahme an einem Absorber für Solarstrahlung, der in der Kammer angeordnet ist und der ein kuppelförmiges Eintrittsfenster (21) aus Quarzglas für die Solarstrahlung aufweist, wobei das Eintrittsfenster (21) eine dem Absorber zugewandte und eine in Betrieb nominale Innentemperatur Ti von mindestens 950 °C aufweisende Innenseite (23), sowie eine dem Absorber abgewandte und einer Umgebungstemperatur Tu ausgesetzte Außenseite (24) aufweist, **dadurch gekennzeichnet, dass** das Eintrittsfenster (21) eine Wandstärke d mit einem Maximum im Bereich einer Kuppelmitte (25) hat, die in Abhängigkeit von Ti und Tu so ausgelegt ist, dass sich in Betrieb m Bereich der Eintrittsfenster-Außenseite (24) eine Temperatur Ta von weniger als 850 °C einstellt, mit den zusätzlichen Maßgaben, dass die Temperaturdifferenz Ti-Ta mindestens 150 °C und die Wandstärke d im Bereich eines Maximums der Innentemperatur Ti mindestens 7 mm betragen.

**2.** Solarstrahlungsempfänger nach Anspruch 1, **dadurch gekennzeichnet, dass** das Eintrittsfenster (21) eine Wandstärke d hat, die in Abhängigkeit von Ti und Tu so ausgelegt ist, dass sich im Bereich der Außenseite (24) eine Temperatur Ta von weniger als 800 °C, vorzugsweise weniger als 750 °C einstellt.

**3.** Solarstrahlungsempfänger nach Anspruch 1 oder 2, **dadurch gekennzeichnet, dass** die Wandstärke d im Bereich der maximalen Innentemperatur Ti mindestens 10 mm, vorzugsweise mindestens 20 mm beträgt.

**4.** Solarstrahlungsempfänger nach einem der vorhergehenden Ansprüche, **dadurch gekennzeichnet, dass** die Wandstärke d im Bereich der maximalen Innentemperatur Ti anhand folgender Bemessungsregel ausgelegt ist:

$$d > \lambda(Ti\text{-}Ta) \, / \, \alpha(Ta\text{-}Tu) \qquad\qquad (1),$$

wobei: $\lambda$ = Wärmeleitungskoeffizient von transparentem Quarzglas
$\alpha$ = Wärmeübergangskoeffizient Quarzglas/Luft

**5.** Solarstrahlungsempfänger nach Anspruch 1, **dadurch gekennzeichnet, dass** die Wandstärke im Maximum um mindestens 20 %, vorzugsweise um mindestens 50 % größer ist als im Bereich eines Minimums.

**6.** Solarstrahlungsempfänger nach einem der vorhergehenden Ansprüche, **dadurch gekennzeichnet, dass** das Quarzglas des Eintrittsfensters (21) einen mittleren Hydroxylgruppengehalt von weniger als 100 Gew.-ppm, vorzugsweise von weniger als 30 Gew.-ppm aufweist.

## Claims

**1.** A solar radiation receiver comprising a chamber for the purpose of passing a working gas to an absorber for solar radiation for thermal absorption, the absorber being arranged in the chamber and having a dome-shaped window (21) made of quartz glass for solar radiation, the window (21) having an inside (23) which faces the absorber and has in operation a nominal internal temperature Ti of at least 950°C, and an outside (24) which faces away from the absorber and is exposed to an ambient temperature Tu, **characterized in that** the window (21) has a wall thickness d that has a maximum in the area of a dome center (25), the thickness d is configured in response to Ti and Tu such that in the area of the window outside (24) in operation a temperature Ta that is less than 850°C is obtained, with the additional provisions that the temperature difference Ti-Ta is at least 150°C and the wall thickness d in the region of a maximum of the internal temperature Ti is at least 7 mm.

**2.** The solar radiation receiver according to claim 1, **characterized in that** the window (21) has a wall thickness d which is configured in response to Ti and Tu such that in the area of the outside (24) a temperature Ta of less than 800°C, preferably less than 750°C, is obtained.

**3.** The solar radiation receiver according to claim 1 or 2, **characterized in that** the wall thickness d is at least 10 mm, preferably at least 20 mm, in the region of the maximum internal temperature Ti.

4. The solar radiation receiver according to any one of the preceding claims, **characterized in that** the wall thickness d in the region of the maximum internal temperature Ti is configured such that it conforms to the following dimensioning rule:

$$d > \lambda(Ti\text{-}Ta) \, / \, \alpha(Ta\text{-}Tu) \qquad\qquad (1),$$

where: $\lambda$ = heat conduction coefficient of transparent quartz glass
$\alpha$ = heat transfer coefficient quartz glass/air

5. The solar radiation receiver according to claim 5, **characterized in that** the wall thickness is greater in the maximum by at least 20%, preferably by at least 50%, than in the region of a minimum.

6. The solar radiation receiver according to any one of the preceding claims, **characterized in that** the quartz glass of the window (21) has a mean hydroxyl group content of less than 100 ppm by wt., preferably of less than 30 ppm by wt.


**Revendications**

1. Récepteur solaire comprenant une chambre servant au passage d'un gaz de travail pour l'absorption de chaleur dans un absorbeur pour rayonnement solaire, qui est disposé dans la chambre et qui comporte une fenêtre d'entrée (21) en forme de dôme en verre de quartz pour le rayonnement solaire, la fenêtre d'entrée (21) comportant un côté intérieur (23) orienté vers l'absorbeur et présentant une température intérieure Ti nominale en fonctionnement d'au moins 950 °C, ainsi qu'un côté extérieur (24) orienté dans la direction opposée à l'absorbeur et soumis à une température ambiante Tu, **caractérisé en ce que** la fenêtre d'entrée (21) présente une épaisseur de paroi d avec un maximum dans la zone d'un centre de dôme (25), qui est conçue en fonction de Ti et Tu de telle manière que, en fonctionnement, une température Ta inférieure à 850 °C s'établit dans la zone du côté extérieur (24) de la fenêtre d'entrée, avec comme règle supplémentaire que la différence de température Ti-Ta est d'au moins 150 °C et l'épaisseur de paroi d dans la zone d'une température intérieure Ti maximale est d'au moins 7 mm.

2. Récepteur solaire selon la revendication 1, **caractérisé en ce que** la fenêtre d'entrée (21) présente une épaisseur de paroi d, qui est conçue en fonction de Ti et Tu de telle manière qu'une température Ta inférieure à 800 °C, de préférence inférieure à 750 °C, s'établit dans la zone du côté extérieur (24).

3. Récepteur solaire selon la revendication 1 ou 2, **caractérisé en ce que**, dans la zone de température intérieure Ti maximale, l'épaisseur de paroi d est d'au moins 10 mm, de préférence au moins 20 mm.

4. Récepteur solaire selon l'une des revendications précédentes, **caractérisé en ce que**, dans la zone de température intérieure Ti maximale, l'épaisseur de paroi d est conçue en s'appuyant sur la règle de dimensionnement suivante :

$$d > \lambda(Ti\text{-}Ta) \, / \, \alpha(Ta\text{-}Tu) \qquad (1),$$

où : $\lambda$ = coefficient de conductibilité thermique du verre de quartz transparent
$\alpha$ = coefficient de transfert thermique verre de quartz/air

5. Récepteur solaire selon la revendication 1, **caractérisé en ce que** l'épaisseur de paroi est, au maximum, au moins 20 %, de préférence au moins 50 %, supérieure à celle dans la zone d'un minimum.

6. Récepteur solaire selon l'une des revendications précédentes, **caractérisé en ce que** le verre de quartz de la fenêtre d'entrée (21) présente une teneur moyenne en groupes hydroxy inférieure à 100 ppm en poids, de préférence inférieure à 30 ppm en poids.

**Fig. 1**

**Fig. 2**

20

13
14
15

16

**Fig. 3**

20

19

18

17

13

**Fig. 4**

20

21

23

22

24

25

**Fig. 5**

Fig. 6

**EP 2 756 237 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1610073 A2
- WO 2010055439 A2

- DE 10213539 A1
- DE 102008033946 B3